# EUROPEAN PATENT SPECIFICATION

(11) **EP 3 512 116 B1**
(45) Date of publication and mention of the grant of the patent: **13.05.2020**
(21) Application number: 18151194.0
(22) Date of filing: 11.01.2018
(51) Int. Cl.: H04B 7/06, A63H 27/00

(54) **A DRONE FOR SIDEWARDLY COMMUNICATING WITH FLYING DRONES**
DROHNE ZUR SEITWÄRTSKOMMUNIKATION MIT FLIEGENDEM DROHNEN
DRONE POUR COMMUNIQUER LATÉRALEMENT AVEC DES DRONES VOLANTS

(43) Date of publication of application: 17.07.2019
(73) Proprietor: Deutsche Telekom AG, 53113 Bonn (DE)
(72) Inventor: Wannemacher, Georg, 66386 St. Ingbert (DE)
(74) Representative: Nern, Peter-Michael

(56) References cited:
- EP-A1- 3 248 865
- WO-A1-2016/061535

## Description

### TECHNICAL FIELD

The present invention relates to the field of beamforming antennas, in particular for drone-to-drone communication.

### TECHNICAL BACKGROUND

Flying drones are usually exposed to strong radio interference from base stations due to their elevated position which is not obstructed by buildings and other ground infrastructure. For communication with a particular base station, planar beamforming antennas tilted in downward direction are usually used which allow for providing a spatially directed transmission beam to the base station in the downward direction.

Such planar beamforming antennas may, however, be subject to restrictions when communicating over a side link with other flying drones. In particular, communication with other flying drones flying at the same altitude or at an increased altitude may not be possible or may severely be impeded.

In WO 2016/061535 A1, a system for forming and pointing beams from an unmanned aerial vehicle (UAV) toward target cells in a coverage area on the ground is disclosed. Pointing of antenna beams may be realized using an antenna fixture for actuator based beam forming or using a phased array for electronic beam forming.

In EP 3 248 865 A1, a system for bistatic radar target detection using an unmanned aerial vehicle (UAV) is disclosed. Deployable antenna arms support a passive radar receiver for bistatic reception of reflected radar pulses.

### SUMMARY

It is an object of the invention to provide a drone capable of sidewardly communicating with other flying drones.

This object is achieved by the features of the independent claims. Further implementation forms are apparent from the dependent claims, the description and the figures.

The invention is based on the finding that an array of antenna elements may be arranged on an outwardly directed circumferential surface of a circumferential support frame of the drone for allowing a direct communication with other flying drones over a side link. The circumferential support frame may e.g. surround a propeller drive of the drone or the drone itself. Analogously, a further array of further antenna elements may be arranged on a further outwardly directed circumferential surface of a further circumferential support frame of the drone. The drone is particularly suited for multiple-input multiple-output (MIMO) drone-to-drone communication.

According to a first aspect, the invention relates to a drone for sidewardly communicating with flying drones. The drone comprises a circumferential support frame mechanically supporting at least one component of the drone, the circumferential support frame comprising an outwardly directed circumferential surface. The drone further comprises an array of antenna elements arranged along the outwardly directed circumferential surface, the array of antenna elements forming a beamforming antenna for transmitting a spatially directed transmission beam in a sideward direction. The drone further comprises a beam controller being configured to drive a subarray of the array of antenna elements in order to generate the spatially directed transmission beam.

The drone further comprises a propeller drive, wherein the circumferential support frame surrounds the propeller drive. Thus, a more compact implementation of the drone can be realized.

In an embodiment, the outwardly directed circumferential surface is a cylindrical surface. Thus, determining phase shift values for the array of antenna elements for generating the spatially directed transmission beam can be simplified.

In an embodiment, each antenna element of the array of antenna elements is a patch antenna. Thus, the antenna elements can efficiently be implemented.

In an embodiment, the antenna elements of the array of antenna elements are equally spaced along the outwardly directed circumferential surface. Thus, determining phase shift values for the array of antenna elements for generating the spatially directed transmission beam can be simplified.

In an embodiment, the array of antenna elements is a phased array. Thus, the spatially directed transmission beam can efficiently be steered.

In an embodiment, the drone further comprises an array of phase shifters associated with the array of antenna elements, wherein the beam controller is configured to control the array of phase shifters to generate the spatially directed transmission beam. Thus, the antenna elements can efficiently be driven.

In an embodiment, the drone further comprises a further propeller drive, a further circumferential support frame mechanically supporting at least one further component of the drone, the further circumferential support frame comprising a further outwardly directed circumferential surface, wherein the further circumferential support frame surrounds the further propeller drive, and a further array of further antenna elements arranged along the further outwardly directed circumferential surface, the further array of further antenna elements forming a further beamforming antenna for transmitting a further spatially directed transmission beam in a further sideward direction, wherein the beam controller is configured to drive a further subarray of the further array of further antenna elements in order to generate the further spatially directed transmission beam. Thus, a further spatially directed transmission beam can efficiently be provided.

In an embodiment, the further outwardly directed circumferential surface is a further cylindrical surface. Thus, determining further phase shift values for the further array of further antenna elements for generating the further spatially directed transmission beam can be simplified.

In an embodiment, each further antenna element of the further array of further antenna elements is a patch antenna. Thus, the further antenna elements can efficiently be implemented.

In an embodiment, the further antenna elements of the further array of further antenna elements are equally spaced along the further outwardly directed circumferential surface. Thus, determining further phase shift values for the further array of further antenna elements for generating the further spatially directed transmission beam can be simplified.

In an embodiment, the further array of further antenna elements is a further phased array. Thus, the further spatially directed transmission beam can efficiently be steered.

In an embodiment, the drone further comprises a further array of further phase shifters associated with the further array of further antenna elements, wherein the beam controller is configured to control the further array of further phase shifters to generate the further spatially directed transmission beam. Thus, the further antenna elements can efficiently be driven.

In an embodiment, the beam controller is configured to actuate, in particular to accelerate or decelerate, the propeller drive or the further propeller drive for tilting the spatially directed transmission beam or the further spatially directed transmission beam in a downward direction. Thus, communication to a base station on the ground can be simplified.

According to a second aspect, the invention relates to a method for operating a drone for sidewardly communicating with flying drones. The drone comprises a propeller drive, a circumferential support frame, an array of antenna elements, and a beam controller. The circumferential support frame mechanically supports at least one component of the drone. The circumferential support frame surrounds the propeller drive. The circumferential support frame comprises an outwardly directed circumferential surface. The array of antenna elements is arranged along the outwardly directed circumferential surface. The array of antenna elements forms a beamforming antenna for transmitting a spatially directed transmission beam in a sideward direction. The method comprises driving, by the beam controller, a subarray of the array of antenna elements in order to generate the spatially directed transmission beam.

The method may be performed by the drone. Further features of the method may directly result from the features and/or the functionality of the drone.

The invention can be implemented in hardware and/or software.

### BRIEF DESCRIPTION OF THE FIGURES

Further embodiments of the invention will be described with respect to the following figures, in which:
- Fig. 1a: shows a schematic diagram of a drone for sidewardly communicating with flying drones;
- Fig. 1b: shows a schematic diagram of a drone for sidewardly communicating with flying drones;

- Fig. 1c: shows a schematic diagram of a drone for sidewardly communicating with flying drones;
- Fig. 1d: shows a schematic diagram of a drone for sidewardly communicating with flying drones;
- Fig. 1e: shows a schematic diagram of a circumferential support frame of a drone with an array of antenna elements for communicating with a base station; and
- Fig. 2: shows a schematic diagram of a method for operating a drone for sidewardly communicating with flying drones.

### DETAILED DESCRIPTION OF THE FIGURES

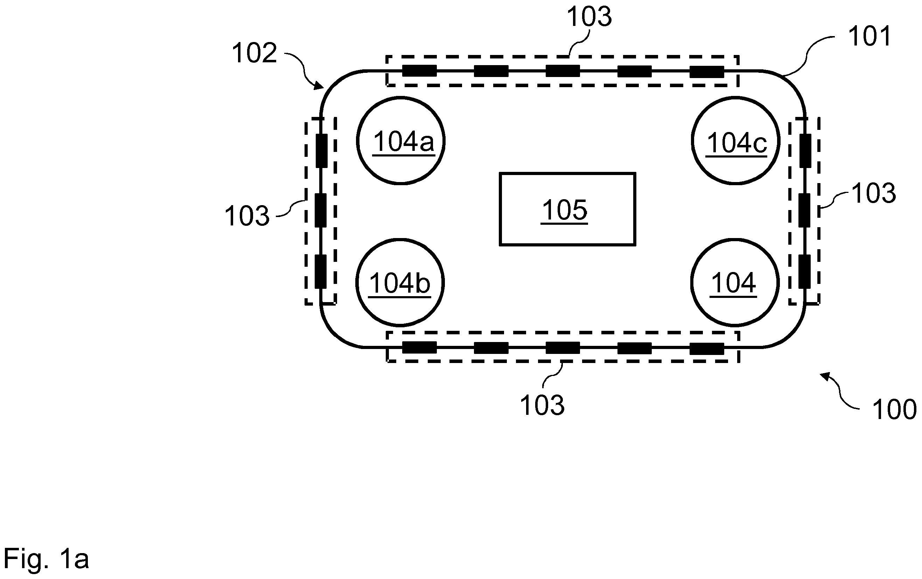

Fig. 1a shows a schematic diagram of a drone 100 for sidewardly communicating with flying drones. The drone 100 comprises a circumferential support frame 101 mechanically supporting at least one component of the drone 100, the circumferential support frame 101 comprising an outwardly directed circumferential surface 102. The drone 100 further comprises an array 103 of antenna elements arranged along the outwardly directed circumferential surface 102, the array 103 of antenna elements forming a beamforming antenna for transmitting a spatially directed transmission beam in a sideward direction. The drone 100 further comprises a beam controller 105 being configured to drive a subarray of the array 103 of antenna elements in order to generate the spatially directed transmission beam. The drone 100 further comprises a plurality of propeller drives 104, 104a, 104b, and 104c. In this embodiment, the circumferential support frame 101 mechanically surrounds the drone 100.

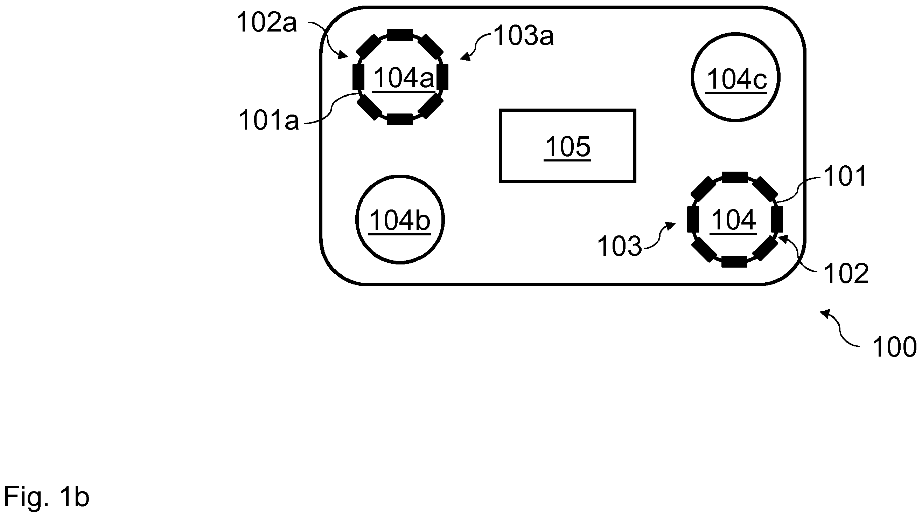

Fig. 1b shows a schematic diagram of a drone 100 for sidewardly communicating with flying drones. The drone 100 comprises a circumferential support frame 101 mechanically supporting at least one component of the drone 100, the circumferential support frame 101 comprising an outwardly directed circumferential surface 102. The drone 100 further comprises an array 103 of antenna elements arranged along the outwardly directed circumferential surface 102, the array 103 of antenna elements forming a beamforming antenna for transmitting a spatially directed transmission beam in a sideward direction. The drone 100 further comprises a beam controller 105 being configured to drive a subarray of the array 103 of antenna elements in order to generate the spatially directed transmission beam. The drone 100 further comprises a further circumferential support frame 101a mechanically supporting at least one further component of the drone 100, the further circumferential support frame 101a comprising a further outwardly directed circumferential surface 102a, and a further array 103a of further antenna elements arranged along the further outwardly directed circumferential surface 102a, the further array 103a of further antenna elements forming a further beamforming antenna for transmitting a further spatially directed transmission beam in a further sideward direction. The beam controller 105 is configured to drive a further subarray of the further array 103a of further antenna elements in order to generate the further spatially directed transmission beam. The outwardly directed circumferential surface 102 may be a cylindrical surface, and the further outwardly directed circumferential surface 102a may be a further cylindrical surface. The drone 100 comprises a plurality of propeller drives 104, 104a, 104b, 104c, in particular a propeller drive 104 and a further propeller drive 104a. In this embodiment, the circumferential support frame 101 surrounds the propeller drive 104, and the further circumferential support frame 101a surrounds the further propeller drive 104a. The propeller drive 104 and the further propeller drive 104a may be any propeller drive of the plurality of propeller drives 104, 104a, 104b, 104c of the drone 100.

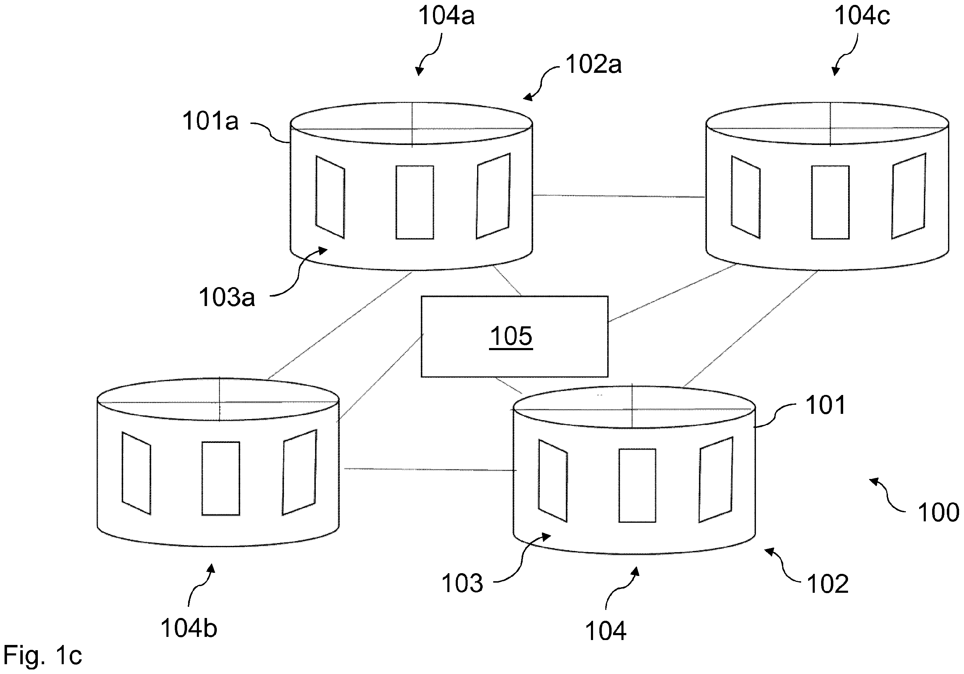

Fig. 1c shows a schematic diagram of a drone 100 for sidewardly communicating with flying drones. The drone 100 comprises a circumferential support frame 101 mechanically supporting at least one component of the drone 100, the circumferential support frame 101 comprising an outwardly directed circumferential surface 102. The drone 100 further comprises an array 103 of antenna elements arranged along the outwardly directed circumferential surface 102, the array 103 of antenna elements forming a beamforming antenna for transmitting a spatially directed transmission beam in a sideward direction. The drone 100 further comprises a beam controller 105 being configured to drive a subarray of the array 103 of antenna elements in order to generate the spatially directed transmission beam. The drone 100 further comprises a further circumferential support frame 101a mechanically supporting at least one further component of the drone 100, the further circumferential support frame 101a comprising a further outwardly directed circumferential surface 102a, and a further array 103a of further antenna elements arranged along the further outwardly directed circumferential surface 102a, the further array 103a of further antenna elements forming a further beamforming antenna for transmitting a further spatially directed transmission beam in a further sideward direction. The beam controller 105 is configured to drive a further subarray of the further array 103a of further antenna elements in order to generate the further spatially directed transmission beam. The outwardly directed circumferential surface 102 may be a cylindrical surface, and the further outwardly directed circumferential surface 102a may be a further cylindrical surface. The drone 100 comprises a plurality of propeller drives 104, 104a, 104b, 104c, in particular a propeller drive 104 and a further propeller drive 104a. In this embodiment, the circumferential support frame 101 surrounds the propeller drive 104, and the further circumferential support frame 101a surrounds the further propeller drive 104a. The propeller drive 104 and the further propeller drive 104a may be any propeller drive of the plurality of propeller drives 104, 104a, 104b, 104c of the drone 100.

It may, however, be sufficient using only one circumferential support frame surrounding one propeller drive, i.e. the propeller drive 104 or the further propeller drive 104a, and only one array of antenna elements, i.e. the array 103 or the further array 103a, for sidewardly communicating with other flying drones.

When using a plurality of circumferential support frames with a plurality of arrays, the number of antenna elements per array may be reduced in order to mitigate radio interference.

Due to the different orientation of antenna elements surrounding the drone 100, a distributed antenna architecture may be provided. For example, some antenna elements may be directed to the forward-left of the drone 100 and other antenna elements may be directed to the rear of the drone 100.

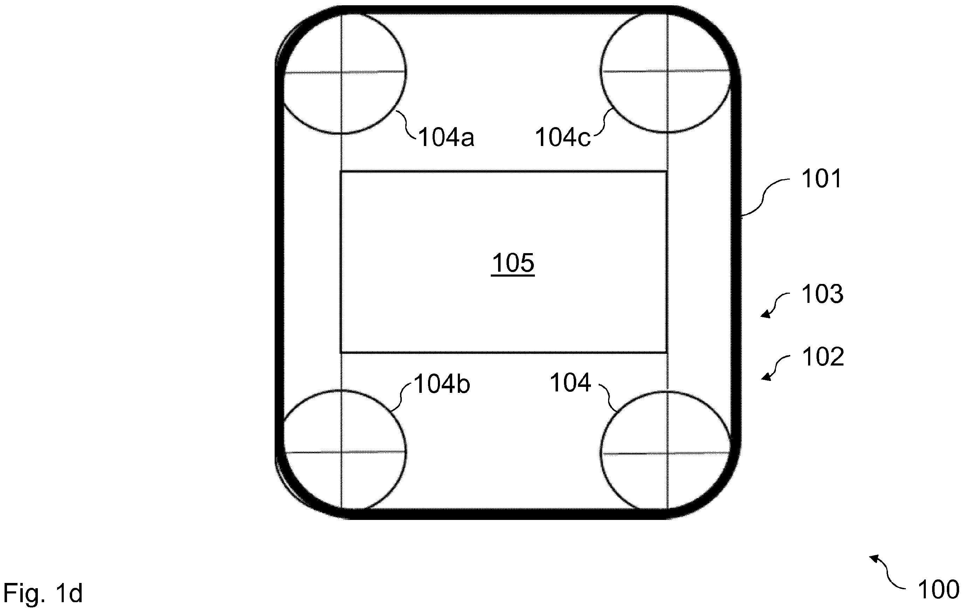

Fig. 1d shows a schematic diagram of a drone 100 for sidewardly communicating with flying drones. The drone 100 comprises a circumferential support frame 101 mechanically supporting at least one component of the drone 100, the circumferential support frame 101 comprising an outwardly directed circumferential surface 102. The drone 100 further comprises an array 103 of antenna elements arranged along the outwardly directed circumferential surface 102, the array 103 of antenna elements forming a beamforming antenna for transmitting a spatially directed transmission beam in a sideward direction. The drone 100 further comprises a beam controller 105 being configured to drive a subarray of the array 103 of antenna elements in order to generate the spatially directed transmission beam. The drone 100 comprises a plurality of propeller drives 104, 104a, 104b, and 104c. In this embodiment, the circumferential support frame 101 mechanically surrounds the drone 100.

The outwardly directed circumferential surface 102 may be a cylindrical surface. Alternatively, the outwardly directed circumferential surface 102 may not be a cylindrical surface but an arbitrary shaped surface. The outwardly directed circumferential surface 102 may e.g. comprise planar portions along the sides of the drone 100. The outwardly directed circumferential surface 102 may in particular comprise four planar portions along the four sides of the drone 100. The antenna elements may e.g. be arranged in a planar manner along the planar portions.

The beam controller 105 may be configured to store reference phase shift values for generating spatially directed transmission beams using a planar beamforming antenna having a planar distributed array of antenna elements. The pre-stored reference phase shift values may be part of a pre-stored code book associated with the planar beamforming antenna. The pre-stored code book may e.g. be standardized by a 5G standardization body, such as the 3GPP. Thus, conformity with the 5G standard may be realized.

The pre-stored code book may e.g. indicate a respective pre-stored reference phase shift value for each respective antenna element of the planar beamforming antenna associated with a specific beam direction. The pre-stored code book may be represented in form of a look-up table. For an exemplary 4x2 planar beamforming antenna, the pre-stored code book may include for an exemplary beam direction to the front the following entries: [1,1] = -25°, [2,1] = -10°, [3,1] = +10°, [4,1] = +25°, [1,2] = -25°, [2,2] = -10°, [3,2] = +10°, and [4,2] = +25°.

The beam controller 105 may be configured to select a subset of the pre-stored reference phase shift values for generating the spatially directed transmission beam, to adapt the selected subset of pre-stored reference phase shift values to the distribution of the array 103 of antenna elements along the outwardly directed circumferential surface 102 to obtain adapted phase shift values, and to drive the subarray of the array 103 of antenna elements using the adapted phase shift values to generate the spatially directed transmission beam.

The beam controller 105 may be configured to perform a spatial coordinate transformation, e.g. a Cartesian-to-Cylindrical coordinate transformation, to adapt the selected subset of the pre-stored reference phase shift values to the distribution of the array 103 of antenna elements along the outwardly directed circumferential surface 102.

The approaches described in conjunction with this embodiment may analogously be applied in any of the previously described embodiments.

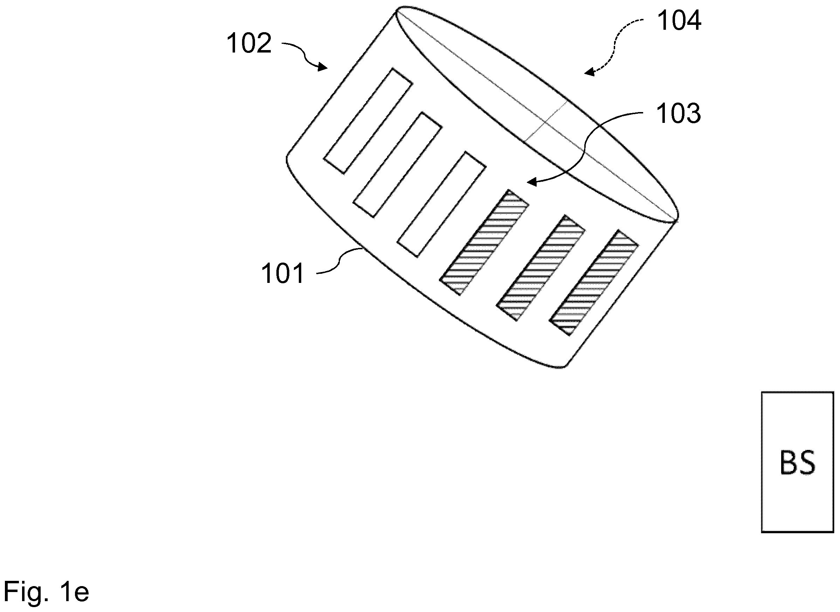

Fig. 1e shows a schematic diagram of a circumferential support frame 101 of a drone with an array 103 of antenna elements for communicating with a base station BS. A subarray of the array 103 of antenna elements for generating a spatially directed transmission beam to the base station BS is shaded in the figure.

The drone may comprise a plurality of propeller drives, in particular a propeller drive 104 and a further propeller drive (not shown). A beam controller of the drone may be configured to actuate, in particular to accelerate or decelerate, the propeller drive 104 and/or the further propeller drive (not shown) for tilting the spatially directed transmission beam or the further spatially directed transmission beam in a downward direction to the base station BS. The array 103 of antenna elements can thus be used for communication over a down link to the base station BS. Only the subarray, which is directed towards the base station BS, is used for generating the spatially directed transmission beam.

The approaches described in conjunction with this embodiment may analogously be applied in any of the previously described embodiments.

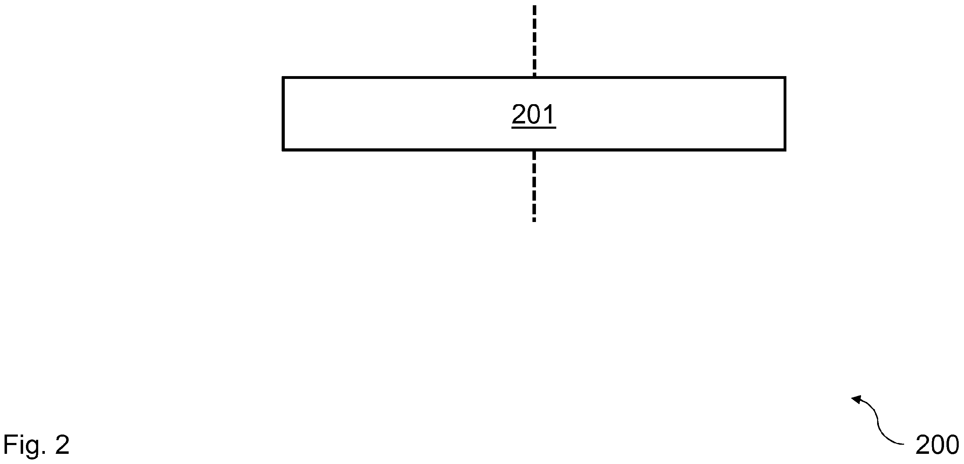

Fig. 2 shows a schematic diagram of a method 200 for operating a drone for sidewardly communicating with flying drones. The drone comprises a circumferential support frame, an array of antenna elements, and a beam controller. The circumferential support frame mechanically supports at least one component of the drone. The circumferential support frame comprises an outwardly directed circumferential surface. The array of antenna elements is arranged along the outwardly directed circumferential surface. The array of antenna elements forms a beamforming antenna for transmitting a spatially directed transmission beam in a sideward direction. The method 200 comprises driving 201, by the beam controller, a subarray of the array of antenna elements in order to generate the spatially directed transmission beam.

Although the present invention and its advantages have been described in detail, it should be understood that various changes, substitutions and alterations can be made herein without departing from the scope of the invention as defined by the appended claims.

### REFERENCE SIGNS

- 100: Drone
- 101: Circumferential support frame
- 102: Outwardly directed circumferential surface
- 103: Array of antenna elements
- 104: Propeller drive
- 105: Beam controller

- 101a: Further circumferential support frame
- 102a: Further outwardly directed circumferential surface
- 103a: Further array of antenna elements
- 104a: Further propeller drive
- 104b: Further propeller drive
- 104c: Further propeller drive

- 200: Method for operating a drone
- 201: Driving

- BS: Base station

## Claims

1. A drone (100) for sidewardly communicating with flying drones, the drone (100) comprising:
a propeller drive (104);
a circumferential support frame (101) mechanically supporting at least one component of the drone (100), the circumferential support frame (101) surrounding the propeller drive (104), the circumferential support frame (101) comprising an outwardly directed circumferential surface (102);
an array (103) of antenna elements arranged along the outwardly directed circumferential surface (102), the array (103) of antenna elements forming a beamforming antenna for transmitting a spatially directed transmission beam in a sideward direction; and
a beam controller (105) being configured to drive a subarray of the array (103) of antenna elements in order to generate the spatially directed transmission beam.

2. The drone (100) of claim 1, wherein the outwardly directed circumferential surface (102) is a cylindrical surface.

3. The drone (100) of any one of the preceding claims, wherein each antenna element of the array (103) of antenna elements is a patch antenna.

4. The drone (100) of any one of the preceding claims, wherein the antenna elements of the array (103) of antenna elements are equally spaced along the outwardly directed circumferential surface (102).

5. The drone (100) of any one of the preceding claims, further comprising:
an array of phase shifters associated with the array (103) of antenna elements;
wherein the beam controller (105) is configured to control the array of phase shifters to generate the spatially directed transmission beam.

6. The drone (100) of any one of the preceding claims, further comprising:
a further propeller drive (104a);
a further circumferential support frame (101a) mechanically supporting at least one further component of the drone (100), the further circumferential support frame (101a) comprising a further outwardly directed circumferential surface (102a), wherein the further circumferential support frame (101a) surrounds the further propeller drive (104a);
a further array (103a) of further antenna elements arranged along the further outwardly directed circumferential surface (102a), the further array (103a) of further antenna elements forming a further beamforming antenna for transmitting a further spatially directed transmission beam in a further sideward direction;
wherein the beam controller (105) is configured to drive a further subarray of the further array (103a) of further antenna elements in order to generate the further spatially directed transmission beam.

7. The drone (100) of claim 6, wherein the further outwardly directed circumferential surface (102a) is a further cylindrical surface.

8. The drone (100) of any one of the claims 6 or 7, wherein each further antenna element of the further array (103a) of further antenna elements is a patch antenna.

9. The drone (100) of any one of the claims 6 to 8, wherein the further antenna elements of the further array (103a) of further antenna elements are equally spaced along the further outwardly directed circumferential surface (102a).

10. The drone (100) of any one of the claims 6 to 9, further comprising:
a further array of further phase shifters associated with the further array (103a) of further antenna elements;
wherein the beam controller (105) is configured to control the further array of further phase shifters to generate the further spatially directed transmission beam.

11. The drone (100) of any one of the claims 6 to 10, wherein the beam controller (105) is configured to actuate, in particular to accelerate or decelerate, the propeller drive (104) or the further propeller drive (104a) for tilting the spatially directed transmission beam or the further spatially directed transmission beam in a downward direction.

12. A method (200) for operating a drone (100) for sidewardly communicating with flying drones, the drone (100) comprising a propeller drive (104), a circumferential support frame (101), an array (103) of antenna elements, and a beam controller (105), the circumferential support frame (101) mechanically supporting at least one component of the drone (100), the circumferential support frame (101) surrounding the propeller drive (104), the circumferential support frame (101) comprising an outwardly directed circumferential surface (102), the array (103) of antenna elements being arranged along the outwardly directed circumferential surface (102), the array (103) of antenna elements forming a beamforming antenna for transmitting a spatially directed transmission beam in a sideward direction, the method (200) comprising:
driving (201), by the beam controller (105), a subarray of the array (103) of antenna elements in order to generate the spatially directed transmission beam.

## Patentansprüche

1. Drohne (100) zur Seitwärtskommunikation mit fliegenden Drohnen, wobei die Drohne (100) umfasst:
einen Propellerantrieb (104);
einen umlaufenden Stützrahmen (101), der mindestens eine Komponente der Drohne (100) mechanisch stützt, wobei der umlaufende Stützrahmen (101) den Propellerantrieb (104) umgibt, wobei der umlaufende Stützrahmen (101) eine auswärts gerichtete Umfangsfläche (102) umfasst;
eine Anordnung (103) von Antennenelementen, die entlang der auswärts gerichteten Umfangsfläche (102) angeordnet sind, wobei die Anordnung (103) von Antennenelementen eine Strahlformungsantenne zum Senden eines räumlich gerichteten Sendestrahls in einer Seitwärtsrichtung bildet; und
eine Strahlsteuervorrichtung (105), die dazu eingerichtet ist, eine Unteranordnung der Anordnung (103) von Antennenelementen anzusteuern, um den räumlich gerichteten Sendestrahl zu erzeugen.

2. Drohne (100) nach Anspruch 1, wobei die auswärts gerichtete Umfangsfläche (102) eine zylindrische Fläche ist.

3. Drohne (100) nach einem der vorhergehenden Ansprüche, wobei jedes Antennenelement der Anordnung (103) von Antennenelementen eine Patchantenne ist.

4. Drohne (100) nach einem der vorhergehenden Ansprüche, wobei die Antennenelemente der Anordnung (103) von Antennenelementen in gleichem Abstand entlang der auswärts gerichteten Umfangsfläche (102) angeordnet sind.

5. Drohne (100) nach einem der vorhergehenden Ansprüche, ferner umfassend:
eine Anordnung von Phasenschiebern, die mit der Anordnung (103) von Antennenelementen verknüpft sind;
wobei die Strahlsteuervorrichtung (105) dazu eingerichtet ist, die Anordnung von Phasenschiebern zu steuern, um den räumlich gerichteten Sendestrahl zu erzeugen.

6. Drohne (100) nach einem der vorhergehenden Ansprüche, ferner umfassend:
einen weiteren Propellerantrieb (104a);
einen weiteren umlaufenden Stützrahmen (101a), der mindestens eine weitere Komponente der Drohne (100) mechanisch stützt, wobei der weitere umlaufende Stützrahmen (101a) eine weitere auswärts gerichtete Umfangsfläche (102a) aufweist, wobei der weitere umlaufende Stützrahmen (101a) den weiteren Propellerantrieb (104a) umgibt;
eine weitere Anordnung (103a) von weiteren Antennenelementen, die entlang der weiteren auswärts gerichteten Umfangsfläche (102a) angeordnet sind, wobei die weitere Anordnung (103a) weiterer Antennenelemente eine weitere Strahlformungsantenne zum Senden eines weiteren räumlich gerichteten Sendestrahls in einer weiteren Seitwärtsrichtung bildet;
wobei die Strahlsteuervorrichtung (105) dazu eingerichtet ist, eine weitere Unteranordnung der weiteren Anordnung (103a) von weiteren Antennenelementen anzusteuern, um den weiteren räumlich gerichteten Sendestrahl zu erzeugen.

7. Drohne (100) nach Anspruch 6, wobei die weitere auswärts gerichtete Umfangsfläche (102a) eine weitere zylindrische Fläche ist.

8. Drohne (100) nach einem der Ansprüche 6 oder 7, wobei jedes weitere Antennenelement der weiteren Anordnung (103a) von weiteren Antennenelementen eine Patchantenne ist.

9. Drohne (100) nach einem der Ansprüche 6 bis 8, wobei die weiteren Antennenelemente der weiteren Anordnung (103a) von weiteren Antennenelementen in gleichen Abständen entlang der weiteren auswärts gerichteten Umfangsfläche (102a) angeordnet sind.

10. Drohne (100) nach einem der Ansprüche 6 bis 9, ferner umfassend:
eine weitere Anordnung von weiteren Phasenschiebern, die mit der weiteren Anordnung (103a) von weiteren Antennenelementen verknüpft sind;
wobei die Strahlsteuervorrichtung (105) dazu eingerichtet ist, die weitere Anordnung von weiteren Phasenschiebern zu steuern, um den weiteren räumlich gerichteten Sendestrahl zu erzeugen.

11. Drohne (100) nach einem der Ansprüche 6 bis 10, wobei die Strahlsteuervorrichtung (105) dazu eingerichtet ist, den Propellerantrieb (104) oder den weiteren Propellerantrieb (104a) zu betätigen, insbesondere zu beschleunigen oder zu verzögern, um den räumlich gerichteten Sendestrahl oder den weiteren räumlich gerichteten Sendestrahl in eine Abwärtsrichtung zu neigen.

12. Verfahren (200) zum Betreiben einer Drohne (100) zur Seitwärtskommunikation mit fliegenden Drohnen, wobei die Drohne (100) einen Propellerantrieb (104), einen umlaufenden Stützrahmen (101), eine Anordnung (103) von Antennenelementen und eine Strahlsteuervorrichtung (105) umfasst, wobei der umlaufende Stützrahmen (101) mindestens eine Komponente der Drohne (100) mechanisch trägt und der umlaufende Stützrahmen (101) den Propellerantrieb (104) umgibt, wobei der umlaufende Stützrahmen (101) eine auswärts gerichtete Umfangsfläche (102) aufweist, wobei die Anordnung (103) von Antennenelementen entlang der auswärts gerichteten Umfangsfläche (102) angeordnet ist, wobei die Anordnung (103) von Antennenelementen eine Strahlformungsantenne zum Senden eines räumlich gerichteten Sendestrahls in einer Seitwärtsrichtung bildet, wobei das Verfahren (200) aufweist:
Ansteuern (201) einer Unteranordnung der Anordnung (103) von Antennenelementen durch die Strahlsteuervorrichtung (105), um den räumlich gerichteten Sendestrahl zu erzeugen.

## Revendications

1. Drone (100) destiné à communiquer latéralement avec des drones volants, le drone (100) comprenant :
un mécanisme d'entraînement à hélice (104) ;
un cadre de support circonférentiel (101) supportant mécaniquement au moins un composant du drone (100), le cadre de support circonférentiel (101) entourant le mécanisme d'entraînement à hélice (104), le cadre de support circonférentiel (101) comprenant une surface circonférentielle dirigée vers l'extérieur (102) ;
un réseau (103) d'éléments d'antenne disposé le long de la surface circonférentielle dirigée vers l'extérieur (102), le réseau (103) d'éléments d'antenne formant une antenne de formation de faisceau pour émettre un faisceau d'émission dirigé spatialement dans une direction latérale ; et
un contrôleur de faisceau (105) configuré pour piloter un sous-réseau du réseau (103) d'éléments d'antenne afin de générer le faisceau d'émission dirigé spatialement.

2. Drone (100) de la revendication 1, dans lequel la surface circonférentielle dirigée vers l'extérieur (102) est une surface cylindrique.

3. Drone (100) de l'une quelconque des revendications précédentes, dans lequel chaque élément d'antenne du réseau (103) d'éléments d'antenne est une antenne à plaque.

4. Drone (100) de l'une quelconque des revendications précédentes, dans lequel les éléments d'antenne du réseau (103) d'éléments d'antenne sont également espacés le long de la surface circonférentielle dirigée vers l'extérieur (102).

5. Drone (100) de l'une quelconque des revendications précédentes, comprenant en outre :
un réseau de déphaseurs associé au réseau (103) d'éléments d'antenne ;
dans lequel le contrôleur de faisceau (105) est configuré pour contrôler le réseau de déphaseurs pour générer le faisceau d'émission dirigé spatialement.

6. Drone (100) de l'une quelconque des revendications précédentes, comprenant en outre :
un autre mécanisme d'entraînement à hélice (104a) ;
un autre cadre de support circonférentiel (101a) supportant mécaniquement au moins un autre composant du drone (100), l'autre cadre de support circonférentiel (101a) comprenant une autre surface circonférentielle dirigée vers l'extérieur (102a), l'autre cadre de support circonférentiel (101a) entourant l'autre mécanisme d'entraînement à hélice (104a) ;
un autre réseau (103a) d'autres éléments d'antenne disposé le long de l'autre surface circonférentielle dirigée vers l'extérieur (102a), l'autre réseau (103a) d'autres éléments d'antenne formant une autre antenne de formation de faisceau pour émettre un autre faisceau d'émission dirigé spatialement dans une autre direction latérale ;
dans lequel le contrôleur de faisceau (105) est configuré pour piloter un autre sous-réseau de l'autre réseau (103a) d'autres éléments d'antenne afin de générer l'autre faisceau d'émission dirigé spatialement.

7. Drone (100) de la revendication 6, dans lequel l'autre surface circonférentielle dirigée vers l'extérieur (102a) est une autre surface cylindrique.

8. Drone (100) de l'une quelconque des revendications 6 et 7, dans lequel chaque autre élément d'antenne de l'autre réseau (103a) d'autres éléments d'antenne est une antenne à plaque.

9. Drone (100) de l'une quelconque des revendications 6 à 8, dans lequel les autres éléments d'antenne de l'autre réseau (103a) d'autres éléments d'antenne sont également espacés le long de l'autre surface circonférentielle dirigée vers l'extérieur (102a).

10. Drone (100) de l'une quelconque des revendications 6 à 9, comprenant en outre :
un autre réseau d'autres déphaseurs associé à l'autre réseau (103a) d'autres éléments d'antenne ;
dans lequel le contrôleur de faisceau (105) est configuré pour contrôler l'autre réseau d'autres déphaseurs pour générer l'autre faisceau d'émission dirigé spatialement.

11. Drone (100) de l'une quelconque des revendications 6 à 10, dans lequel le contrôleur de faisceau (105) est configuré pour actionner, en particulier pour accélérer ou décélérer, le mécanisme d'entraînement à hélice (104) ou l'autre mécanisme d'entraînement à hélice (104a) pour incliner le faisceau d'émission dirigé spatialement ou l'autre faisceau d'émission dirigé spatialement dans une direction descendante.

12. Procédé (200) de fonctionnement d'un drone (100) destiné à communiquer latéralement avec des drones volants, le drone (100) comprenant un mécanisme d'entraînement à hélice (104), un cadre de support circonférentiel (101), un réseau (103) d'éléments d'antenne, et un contrôleur de faisceau (105), le cadre de support circonférentiel (101) supportant mécaniquement au moins un composant du drone (100), le cadre de support circonférentiel (101) entourant le mécanisme d'entraînement à hélice (104), le cadre de support circonférentiel (101) comprenant une surface circonférentielle dirigée vers l'extérieur (102), le réseau (103) d'éléments d'antenne étant disposé le long de la surface circonférentielle dirigée vers l'extérieur (102), le réseau (103) d'éléments d'antenne formant une antenne de formation de faisceau pour émettre un faisceau d'émission dirigé spatialement dans une direction latérale, le procédé (200) comprenant :
le pilotage (201), par le contrôleur de faisceau (105), d'un sous-réseau du réseau (103) d'éléments d'antenne afin de générer le faisceau d'émission dirigé spatialement.
